# EUROPÄISCHE PATENTSCHRIFT

(11) **EP 1 104 618 B1**
(45) Veröffentlichungstag und Bekanntmachung des Hinweises auf die Patenterteilung: **26.10.2005**
(21) Anmeldenummer: 99952277.4
(22) Anmeldetag: 04.08.1999
(51) Int. Cl.: H04M 11/06, H04B 7/24

(54) **VERFAHREN ZUM STEUERN DER DATENÜBERTRAGUNG IN EINEM SCHNURLOSEN V.24- DATENÜBERTRAGUNGSSYSTEM**
METHOD FOR CONTROLLING DATA TRANSMISSION IN A WIRELESS V.24 DATA TRANSMISSION SYSTEM
PROCEDE POUR COMMANDER LA TRANSMISSION DE DONNEES DANS UN SYSTEME DE TRANSMISSION DE DONNEES V.24 SANS FIL

(30) Priorität: 12.08.1998 DE 19836609
(43) Veröffentlichungstag der Anmeldung: 06.06.2001
(73) Patentinhaber: SIEMENS AKTIENGESELLSCHAFT, 80333 München (DE)
(72) Erfinder: BIEDERMANN, Rolf, D-48683 Ahaus (DE); GARCIA ALFARO, Diego, D-22869 Schenefeld (DE)
(86) Internationale Anmeldenummer: PCT/DE1999/002419
(87) Internationale Veröffentlichungsnummer: WO 2000/010292

(56) Entgegenhaltungen:
- WO-A-97/41700
- US-A- 5 142 538

## Beschreibung

Daten-Telekommunikation (Datel) ist das gegenseitige Senden und Empfangen von Daten bzw. Datensignalen (Paketdaten) zwischen einer Datenendeinrichtung - z.B. Personal Computer, Daten-Terminals, DV-Anlagen etc. - und einer fernen Datenendeinrichtung - z.B. Personal Computer, Daten-Terminals, DV-Anlagen etc. - über ein Telekommunikationsnetz, beispielsweise ein öffentliches Telekommunikationsnetz (Stw.: ISDN, PSTN etc.). Damit die von der Datenendeinrichtung gesendeten Daten bzw. Datensignale über das Telekommunikationsnetz übertragen werden können, ist zwischen der Datenendeinrichtung und dem Telekommunikationsnetz eine netztechnische Einrichtung, die sogenannte Datenübertragungseinrichtung, vorgesehen. Die am weitesten verbreitete Datenübertragungseinrichtung ist neben der PC-Karte (früher: PCMCIA-Karte) das Modem (Kunstwort aus Modulator/Demodulator) [vgl. hierzu u.a. das Gebrauchsmuster DE 297 14 588 U1].

Das Modem ist eine auf der Grundlage des Trägerstromverfahrens arbeitende elektrische Datenübertragungseinrichtung für den Einsatz auf analogen Übertragungswegen begrenzter Bandbreite - z.B. Telekommunikationsleitungen (z.B. a/b-Leitungspaar, ISDN-S₀-Bus etc.) des Telekommunikationsnetzes, das digitale Datensignale in analoge Datensignale und umgekehrt umwandelt und überträgt. In Modem's sind ferner eine Vielzahl von durch die International Telecommunication Union - Telecommunication Standards (ITU-T) standardisierte Verfahren der V-Serie implementiert bzw. realisiert.

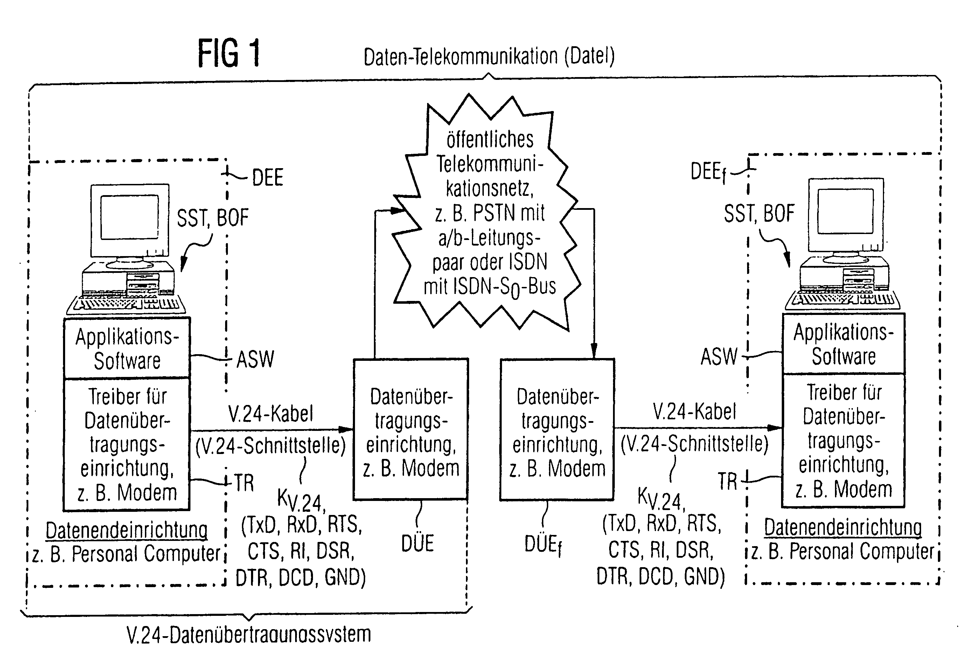

FIGUR 1 zeigt ein Daten-Telekommunikation-Szenario auf der Basis eines V.24-Datenübertragungssystems. Ein V.24-Datenübertragungssystem ist dabei über ein öffentliches - z.B. ein ein a/b-Leitungspaar aufweisendes PSTN (Public Switched Telecommuncation Network) oder ein einen ISDN-S₀-Bus aufweisendes ISDN (Integrated Services Digital Network) - Telekommunikationsnetz mit einem fernen V.24-Datenübertragungssystem verbunden. Das V.24-Datenübertragungssystem weist eine z.B. als Personal Computer ausgebildete Datenendeinrichtung DEE und eine z.B. als Modem ausgebildete Datenübertragungseinrichtung DÜE auf, die über ein V.24-Kabel (V.24-Schnittstelle) K_{V.24} miteinander verbunden sind.

In Analogie dazu weist das ferne V.24-Datenübertragungssystem eine z.B. als Personal Computer ausgebildete ferne Datenendeinrichtung DEE_{f} und eine z.B. als Modem ausgebildete ferne Datenübertragungseinrichtung DÜE_{f} auf, die ebenfalls über ein V.24-Kabel (V.24-Schnittstelle) K_{V.24} miteinander verbunden sind.

Die Datenendeinrichtung DEE, DEE_{f} enthält eine Systemsteuerung SST mit Bedienoberfläche BOF, eine Applikationssoftware ASW und einen Treiber TR als Anpassungsglied zwischen Software (Applikationssoftware) und Hardware (Datenübertragungseinrichtung bzw. Modem).

Der Treiber TR ist Modem-Hersteller-spezifisch und vorzugsweise als CAPI-Treiber (Common ISDN Application Programmable Interface; standardisierte Kommunikationsschnittstelle zur Anwendersoftware für die fehlertolerante ISDN-Telekommunikation mit dem Personal Computer) oder als TAPI-Treiber (Telephone Application Programmable Interface) ausgebildet.

Eine Vielzahl der auf dem Markt erhältlichen Datenübertragungseinrichtungen DÜE, z.B. analoge Modem's und PC-externe ISDN-Terminal Adapter, werden über einen HAYES-Befehlssatz (HAYES-Standard) gesteuert. Der HAYES-Standard ist ursprünglich ein amerikanischer Industrie-Standard für die Modemkommunikation, insbesondere für die Modemsteuerung durch die Datenendeinrichtung DEE gewesen. Er wird auch als AT-Standard bezeichnet, weil fast alle Kommandos des HAYES-Befehlssatzes mit dem Prefix "AT" (ATtention) mit den ASCII-Zeichen A und T beginnen. Der inzwischen weltweit eingeführte Standard ist Gegenstand einer ITU-Empfehlung (International Telecommunication Union) mit der Bezeichnung "ITU-T V.25ter". Statt des Prefix "AT" können auch der Prefix "at", der Prefix "A/" oder der Prefix "a/" verwendet werden.

Bei diesen Modem's wechselt der Modem-Treiber TR der Datenendeinrichtung DEE je nach Datenübertragungsphase (z. B. Verbindungsaufbau, Aushandeln der Übertragungsparameter usw.) die Baudrate an der V.24-Schnittstelle. Dieser Wechsel der Baudrate wird über das V.24-Kabel K_{V.24} jedoch nicht mittels einer Signalisierung an die Datenübertragungseinrichtung bzw. das Modem DÜE übertragen. Das Modem DÜE muß die neu eingestellte Baudrate also selbständig erkennen und sich an den Treiber TR anpassen (Autobauding). Als Regel gilt hierbei: die Baudrate, mit der die "AT"-Zeichenfolge übertragen wird, gilt bis zum Empfang der nächsten "AT"-Zeichenfolge.

Dieses Autobauding ist an den Modem's so lange aktiv, bis das Modem nach einem Verbindungsaufbau in den Nutzdatenübertragungsmodus bzw. den sogenannten "Transparent-Modus" übergegangen ist. In diesem Modus besteht eine "Point-To-Point"-Verbindung ("Ende-zu-Ende"-Verbindung) mit der fernen Datenübertragungseinrichtung bzw. dem fernen Modem DÜE_{f}. Das Autobauding wird dann ausgeschaltet, damit "AT"-Zeichenfolgen im Nutzdatenstrom nicht interpretiert werden und eventuell eine nicht gewünschte Baudratenänderung am Modem erfolgt.

Das V.24-Kabel bzw. die V.24-Schnittstelle K_{V.24} unterstützt gemäß der ITU-T Spezifikation V.24, März 1993, Seiten 1 bis 19 den Modembetrieb an einen Personal Computer durch verschiedene Leitungen (Statusleitungen). Dieses sind:
1. Eine Sendedatenleitung TxD für die Datenübertragung,
2. eine Empfangsdatenleitung RxD für die Datenübertragung,
3. eine RTS-Leitung (**R**eady **T**o **S**end) RTS für die Übertragungsart "Hardware-Handshake" zur Übertragung des Zustands "**R**EADY **T**O **S**END" (Zustand "RTS"),
4. eine CTS-Leitung (Clear To Send) CTS für die Übertragungsart "Hardware-Handshake" zur Übertragung des Zustands "**C**LEAR **T**O **S**END" (Zustand "CTS"),
5. eine RI-Leitung (**R**ing **I**ndication) RI zur Ruferkennung am Modem,
6. eine DSR-Leitung (**D**ATA **S**ET **R**EADY) DSR, auf der das Modem dem Personal Computer meldet, daß es eingeschaltet ist,
7. eine DTR-Leitung (**D**ATA **T**ERMINAL **R**EADY) DTR, auf der der Personal Computer dem Modem meldet, daß er eingeschaltet ist und bereit ist, Verbindungen aufzunehmen,
8. eine DCD-Leitung (**D**ATA **C**HANNEL **D**ETECTION) DCD, auf der das Modem dem Personal Computer meldet, daß es die Verbindung zu einem fernen Modem aufgenommen bzw. aufgebaut hat,
9. eine Masseleitung (**G**rou**ND**) GND.

Weist das V.24-Kabel bzw. die V.24-Schnittstelle K_{V.24} die vorstehend aufgezählten neun Leitungen nicht auf, sondern weniger als neun, z.B. sieben, so kann dieses 7-polige Kabel dem Modembetrieb an dem Personal Computer dennoch unterstützen. Dies geschieht dadurch, daß statt des "Hardware-Handshake" auf den RTS/CTS-Leitungen eine Übertragungsart "Software-Handshake" zur Übertragung der Zustände "RTS", "CTS" - z.B. mittels eines XON/XOFF-Protokolls - auf den Sende-/Empfangsdatenleitungen TxD, RxD durchgeführt wird. Bei dem "Software-Handshake" werden in der Datenendeinrichtung DEE und der Datenübertragungseinrichtung DÜE der zwischen der Datenendeinrichtung DEE und der Datenübertragungseinrichtung DÜE übertragene Datenstrom analysiert, alle "Software-Handshake-Zeichen" interpretiert und dementsprechend Maßnahmen eingeleitet.

Das in FIGUR 1 dargestellte schnurgebundene V.24-Datenübertragungssystem weist für ein Anwendungsszenario, bei dem die Datenendeinrichtung DEE und die Datenübertragungseinrichtung DÜE räumlich, z.B. über mehrere Meter, voneinander getrennt sind, den Nachteil auf, daß erstens für die Daten-Telekommunikation ein bezüglich der räumlichen Anordnung von Datenendeinrichtung DEE und Datenübertragungseinrichtung DÜE entsprechend langes V.24-Kabel K_{V.24} erforderlich ist und daß zweitens für die Installation des Systems bei derartigen Kabellängen ein großer nicht vernachlässigbarer Aufwand zur Verlegung des Kabels anfällt.

In Analogie zur Schnurlos-Telefonie ist es deshalb wünschenswert und auch vorstellbar, das schnurgebundene V.24-Datenübertragungssystem gemäß FIGUR 1 durch ein schnurloses V.24-Datenübertragungssystem zu ersetzen.

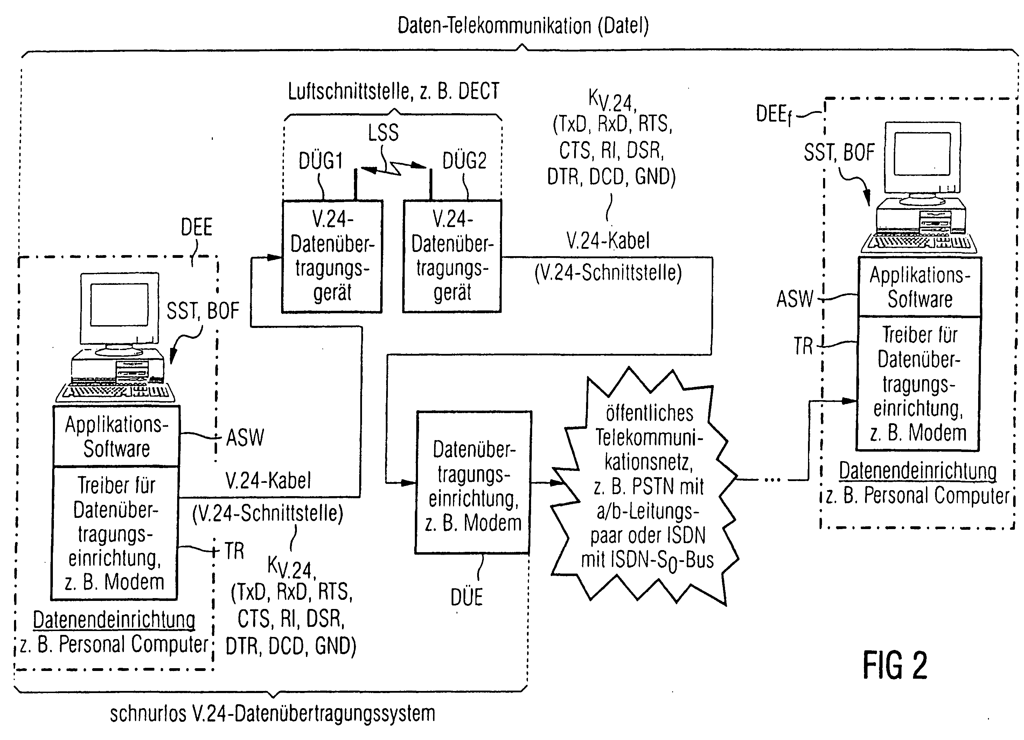

FIGUR 2 zeigt ausgehend von FIGUR 1 ein solches schnurloses V.24-Datenübertragungssystem zur Daten-Telekommunikation. Das in FIGUR 2 nicht vollständig dargestellte ferne V.24-Datenübertragungssystem kann entweder gemäß FIGUR 1 schnurgebunden oder wie das schnurlose V.24-Datenübertragungssystem in FIGUR 2 schnurlos sein. Bei dem schnurlosen V.24-Datenübertragungssystem sind gegenüber dem schnurgebundenen V.24-Datenübertragungssystem in FIGUR 1 das V.24-Kabel bzw. die V.24-Schnittstelle K_{V.24} zwischen der Datenendeinrichtung DEE und der Datenübertragungseinrichtung DÜE aufgetrennt und an den beiden durch die Trennung hervorgerufenen Enden des Kabels jeweils ein Datenübertragungsgerät angeschlossen.

Die beiden Datenübertragungsgeräte, ein mit der Datenendeinrichtung DEE durch das V.24-Kabel bzw. die V.24-Schnittstelle K_{V.24} verbundenes erstes Datenübertragungsgerät DÜG1 und ein mit der Datenübertragungseinrichtung DÜE durch das V.24-Kabel bzw. die V.24-Schnittstelle K_{V.24} verbundenes zweites Datenübertragungsgerät DÜG2, sind durch eine Luftschnittstelle LSS zur drahtlosen Telekommunikation miteinander verbunden.

Luftschnittstellen sind drahtlose Telekommunikationsschnittstellen, bei denen Nachrichten über eine Fernübertragungsstrecke zwischen einer Nachrichtenquelle (z.B. erstes Datenübertragungsgerät DÜG1) und einer Nachrichtensenke (z.B. zweites Datenübertragungsgerät DÜG2) drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT [**D**igital **E**nhanced (früher: **E**uropean) **C**ordless **T**elecommunication; vgl. *Nachrichtentechnik Elektronik 42 (1992) Jan.*/*Feb. Nr. 1, Berlin, DE; U. Pilger "Struktur des DECT-Standards", Seiten 23 bis 29* **in Verbindung mit** der ETSI-Publikation *ETS 300175-1...9, Oktober 1992* und der DECT-Publikation des *DECT-Forum, Februar 1997, Seiten 1 bis 16*], GSM [**G**roupe **S**péciale **M**obile oder **G**lobal **S**ystem for **M**obile Communication; vgl. *Informatik Spektrum 14 (1991) Juni, Nr. 3, Berlin, DE; A.Mann: "Der GSM-Standard - Grundlage für digitale europäische Mobilfunknetze*", *Seiten 137 bis 152* **in Verbindung mit** der Publikation *telekom praxis 4*/*1993, P.Smolka "GSM-Funkschnittstelle* - *Elemente und Funktionen", Seiten 17 bis 24],* UMTS [vgl. *Funkschau 6*/*98: R.Sietmann "Ringen um die UMTS-Schnittstelle"*, *Seiten 76 bis 81*] WACS oder PACS, IS-54, IS-95, PHS, PDC etc. [vgl. IEEE Communications Magazine, January 1995, Seiten 50 bis 57; D.D. Falconer et al:"Time Division Multiple Access Methods for Wireless Personal Communications"] übertragen werden.

In FIGUR 2 ist als Luftschnittstelle LSS vorzugsweise die DECT-Luftschnittstelle vorgesehen. Die DECT-Technologie ist gemäß der Publikation "*Vortrag von A. Elberse, M. Barry*, G. *Fleming zum Thema: "DECT Data Services - DECT in Fixed and Mobile Networks", 17.*/*18. Juni 1996, Hotel Sofitel, Paris; Seiten 1 bis 12 und Zusammenfassung"* wird - ausgehend von der Druckschrift "*Nachrichtentechnik Elektronik 42 (1992) Jan.*/*Feb. Nr. 1, Berlin, DE; U. Pilger "Struktur* des *DECT-Standards*", *Seiten 23 bis* 29 **in Verbindung mit** der ETSI-Publikation *ETS 300175-1...9, Oktober 1992* und den Druckschriften *Components 31 (1993), Heft 6, Seiten 215 bis 218; S. Althammer, D. Brückmann: "Hochoptimierte IC's für DECT* *Schnurlostelefone"* und WO 96/38991 (vgl. Figuren 5 und 6 mit der jeweils dazugehörigen Beschreibung) - die prinzipielle Verwendbarkeit der DECT-Technologie (Digital Enhanced Cordless Telecommuncation) für die drahtlose mobile Fernübertragung von Sprach- und/oder Paketdaten geeignet, bei der der Benutzer durch die DECT-Netzzugriffstechnologie in bezug auf die Fernübertragung von Nutzdaten sowohl zum eigenen Netzbetreiber werden kann als auch eine Zugriffsmöglichkeit zu einem übergeordneten Telekommunikationsnetz hat.

Wenn eine V.24 Kabel-Strecke z.B. zwischen einem Personal Computer und einem Modem durch eine schnurlose Datenübertragungsstrecke gemäß den FIGUREN 1 und 2 ersetzt werden soll, dann muß auch das heutzutage bei Modem's übliche Leistungsmerkmal (Feature) "Autobauding" (automatische Baudratenerkennung an der V.24-Schnittstelle) an der schnurlosen Datenübertragungsstrecke angeboten werden, damit die mit einem Modem gelieferten Modemtreiber weiterhin genutzt werden können und damit ein Baudratenwechsel erkannt werden kann.

Die der Erfindung zugrundeliegende Aufgabe besteht darin, in einem schnurlosen zwischen einer Datenendeinrichtung und einer Datenübertragungseinrichtung zur Daten-Telekommunikation betriebenen V.24-Datenübertragungssystem die Datenübertragung derart zu steuern, daß ein Baudratenwechsel auf einfache Weise erkannt werden kann.

Diese Aufgabe wird durch die Merkmale des Patentanspruches 1 gelöst.

Die der Erfindung zugrundeliegende Idee besteht darin, daß in einem schnurlosen zwischen einer Datenendeinrichtung (z.B. einem Personal Computer) und einer Datenübertragungseinrichtung (z.B. einem Modem) zur Daten-Telekommunikation betriebenen V.24-Datenübertragungssystem mit einem mit der Datenendeinrichtung über ein V.24-Kabel verbundenen ersten Datenübertragungsgerät und mit einem mit der Datenübertragungseinrichtung über ein V.24-Kabel verbundenen zweiten Datenübertragungsgerät, die ihrerseits durch drahtlose Telekommunikation über eine Luftschnittstelle verbindbar sind, ein Baudratenwechsel erkannt wird, indem bei aktivierter Autobauding-Funktion in dem ersten Datenübertragungsgerät und in der Datenübertragungseinrichtung die von dem ersten Datenübertragungsgerät jeweils detektierte Baudrate mittels Signalisierung an das zweite Datenübertragungsgerät übertragen und dort parallel zu zu versendende Kommandodaten (AT-Kommandos) eingestellt.

Vorteilhafte Weiterbildungen der Erfindung sind in den Unteransprüchen angegeben.

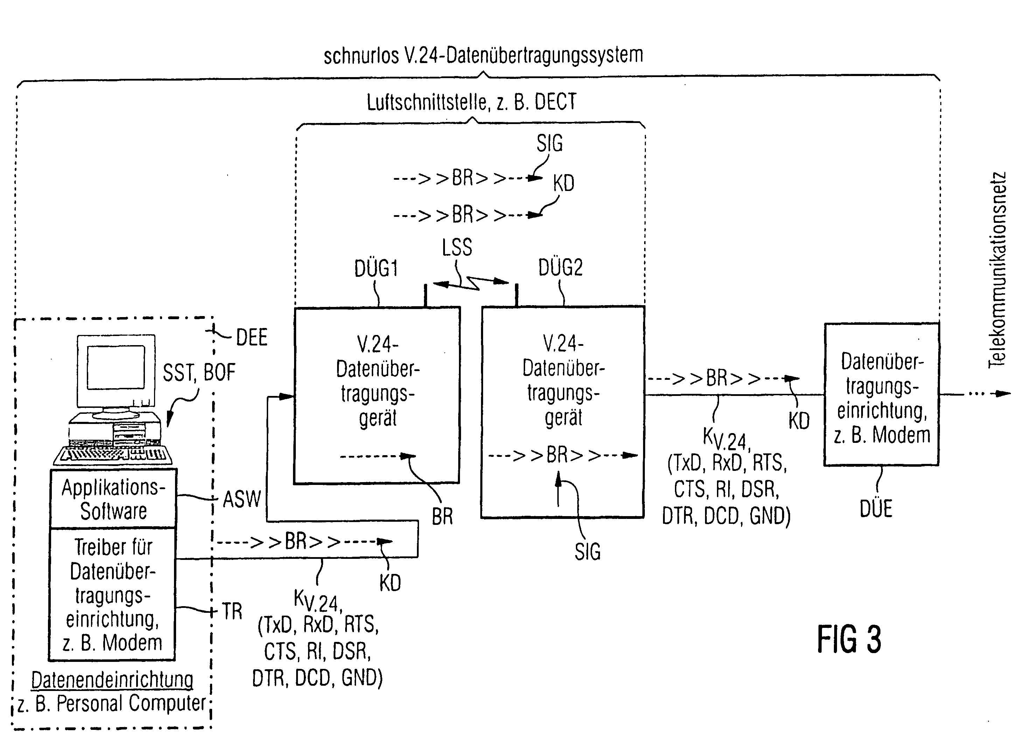

Ein erstes Ausführungsbeispiel der Erfindung wird anhand der FIGUR 3 erläutert.

FIGUR 3 zeigt das schnurlose V.24-Datenübertragungssystem gemäß FIGUR 2, bei dem die Datenübertragung wie folgt gesteuert wird:

Beim Einschalten der Datenendeinrichtung DEE, der Datenübertragungseinrichtung DÜE und den V.24-Datenübertragungsgeräten DÜG1, DÜG2 werden die V.24-Datenübertragungsgeräte DÜG1, DÜG2, die Datenendeinrichtung DEE und die Datenübertragungseinrichtung DÜE in einem Kommandodatenübertragungsmodus betrieben.

In dem Kommandodatenübertragungsmodus überträgt die Datenendeinrichtung DEE je nach Datenübertragungsphase Kommandodaten KD mit unterschiedlichen Baudraten BR.

Das erste V.24-Datenübertragungsgerät DÜG1 erkennt bei aktivierter Autobauding-Funktion, daß die Kommandodaten KD mit unterschiedlichen Baudraten BR übertragen worden sind bzw. daß ein Baudratenwechsel stattgefunden hat, übermittelt dem zweiten V.24-Datenübertragungsgerät DÜG2 mittels Signalisierung SIG die jeweilige Baudrate BR und überträgt die mit den unterschiedlichen Baudraten BR von der Datenendeinrichtung gesendeten Kommandodaten KD an das zweite V.24-Datenübertragungsgerät DÜG2.

Das zweite V.24-Datenübertragungsgerät DÜG2 stellt die von dem ersten V.24-Datenübertragungsgerät DÜG1 empfangenen Baudraten BR parallel zu den empfangenden Kommandodaten KD ein und überträgt die so eingestellten Kommandodaten KD an die Datenübertragungseinrichtung DÜE.

Die Datenübertragungseinrichtung DÜE erkennt bei aktivierter Autobauding-Funktion, daß die Kommandodaten KD mit unterschiedlichen Baudraten BR übertragen worden sind bzw. daß ein Baudratenwechsel stattgefunden hat.

## Patentansprüche

1. Verfahren zum Steuern der Datenübertragung in einem schnurlosen zwischen einer Datenendeinrichtung und einer Datenübertragungseinrichtung zur Daten-Telekommunikation betriebenen V.24-Datenübertragungssystem,
das V.24-Datenübertragungssystem ein erstes V.24-Datenübertragungsgerät (DÜG1) und ein zweites V.24-Datenübertragungsgerät (DÜG2) aufweist, die über eine Luftschnittstelle (LSS) miteinander verbunden sind und wobei das erste V.24-Datenübertragungsgerät (DÜG1) mit der Datenendeinrichtung (DEE), das zweite V.24-Datenübertragungsgerät (DÜG2) mit der Datenübertragungseinrichtung (DÜE) und die Datenübertragungseinrichtung (DÜE) mit einer fernen Datenübertragungseinrichtung DÜE_{f}) mit einer nachgeschalteten fernen Datenendeinrichtung (DEE_{f}) verbunden sind,
mit folgenden Merkmalen:
(a) Beim Einschalten der Datenendeinrichtung (DEE), der Datenübertragungseinrichtung (DÜE) und den V.24-Datenübertragungsgeräten (DÜG1, DÜG2) werden die V.24-Datenübertragungsgeräte (DÜG1, DÜG2), die Datenendeinrichtung (DEE) und die Datenübertragungseinrichtung (DÜE) in einem Kommandodatenübertragungsmodus betrieben,
(b) in dem Kommandodatenübertragungsmodus überträgt die Datenendeinrichtung (DEE) je nach Datenübertragungsphase Kommandodaten (KD) mit unterschiedlichen Baudraten (BR),
(c) das erste V.24-Datenübertragungsgerät (DÜG1) erkennt bei aktivierter Autobauding-Funktion, daß die Kommandodaten (KD) mit unterschiedlichen Baudraten (BR) übertragen worden sind bzw. daß ein Baudratenwechsel stattgefunden hat, übermittelt dem zweiten V.24-Datenübertragungsgerät (DÜG2) mittels Signalisierung (SIG) die jeweilige Baudrate (BR) und überträgt die mit den unterschiedlichen Baudraten (BR) von der Datenendeinrichtung gesendeten Kommandodaten (KD) an das zweite V.24-Datenübertragungsgerät (DÜG2),
(d) das zweite V.24-Datenübertragungsgerät (DÜG2) stellt die von dem ersten V.24-Datenübertragungsgerät (DÜG1) empfangenen Baudraten (BR) parallel zu den empfangenden Kommandodaten (KD) ein und überträgt die so eingestellten Kommandodaten (KD) an die Datenübertragungseinrichtung (DÜE),
(e) die Datenübertragungseinrichtung (DÜE) erkennt bei aktivierter Autobauding-Funktion, daß die Kommandodaten (KD) mit unterschiedlichen Baudraten (BR) übertragen worden sind bzw. daß ein Baudratenwechsel stattgefunden hat.

2. Verfahren nach Anspruch 1, **dadurch gekennzeichnet, daß**
die Kommandodaten Hayes-spezifische Kommandos mit dem Hayes-Prefix "AT (Attention)" sind.

3. Verfahren nach Anspruch 1 oder 2, **dadurch gekennzeichnet, daß**
ein Modem als Datenübertragungseinrichtung und ein Personal Computer als Datenendeinrichtung verwendet wird.

4. Verfahren nach einem der Ansprüche 1 bis 3, **dadurch gekennzeichnet, daß**
eine DECT-Luftschnittstelle als Luftschnittstelle verwendet wird.

## Claims

1. Method for controlling the data transmission in a cordless V.24 data transmission system operated between a data terminal equipment item and a data communication equipment item for the purpose of data telecommunication, the V.24 data transmission system exhibiting a first V.24 data transmission device (DTD1) and a second V.24 data transmission device (DTD2) which are connected to one another via an air interface (LSS) and the first V.24 data transmission device (DTD1) being connected to the data terminal equipment item (DTE), the second V.24 data transmission device (DTD2) being connected to the data communication equipment item (DCE) and the data communication equipment item (DCE) being connected to a remote data communication equipment item (DCEᵣ) with a downstream remote data terminal equipment item (DTEᵣ), having the following features:
(a) when the data terminal equipment item (DTE), the data communication equipment item (DCE) and the V.24 data transmission devices (DTD1, DTD2) are switched on, the V.24 data transmission devices (DTD1, DTD2), the data terminal equipment item (DTE) and the data communication equipment item (DCE) are operated in an instruction data transmission mode,
(b) in the instruction data transmission mode, the data terminal equipment item (DTE) transmits instruction data (KD) at different baud rates (BR) depending on the data tranmission phase,
(c) when the autobauding function is activated, the first V.24 data transmission device (DTD1) detects that the instruction data (KD) have been transmitted at different baud rates (BR) or, respectively, that a change in baud rate has taken place, transmits the respective baud rate (BR) to the second V.24 data transmission device (DTD2) by means of signalling (SIG) and transmits the instruction data (KD) sent by the data terminal equipment item with the different baud rates (BR) to the second V.24 data transmission device (DTD2),
(d) the second V.24 data transmission device (DTD2) sets the baud rates (BR) received from the first V.24 data transmission device (DTD1) in parallel with the received instruction data (KD) and transmits the instruction data (KD) thus set to the data communication equipment item (DCE).
(e) when the autobauding function is activated, the data communication equipment item (DCE) detects that the instruction data (KD) have been transmitted at different baud rates (BR) or, respectively, that a change in baud rate has taken place.

2. Method according to Claim 1, characteized in that the instruction data are Hayes-related instructions with the Hayes prefix "AT (Attention)".

3. Method according to Claim 1 or 2, **characterized in that** a modem is used as the data communication equipment item and a personal computer is used as the data terminal equipment item.

4. Method according to one of Claims 1 to 3, **characterized in that** a DECT air interface is used as the air interface.

## Revendications

1. Procédé pour commander la transmission de données dans un système de transmission de données V.24 sans fil entre un terminal de données et un dispositif de transmission de données pour la télécommunication de données,
le système de transmission de données V.24 présentant une première unité de transmission de données V.24 (DÜG1) et une deuxième unité de transmission de données V.24 (DÜG2), qui sont raccordées entre elles par l'intermédiaire d'une interface air (LSS), la première unité de transmission de données V.24 (DÜG1) étant raccordée au terminal de données (DEE), la deuxième unité de transmission de données V.24 (DÜG2) étant raccordée au dispositif de transmission de données (DÜE) et le dispositif de transmission de données (DÜE) étant raccordé à un dispositif de transmission de données à distance (DÜE_{f}) doté d'un terminal de données à distance (DEE_{f}) installé en aval, comprenant les caractéristiques suivantes :
(a) lors de la connexion du terminal de données (DEE), du dispositif de transmission de données (DÜE) et des unités de transmission de données V.24 (DÜG1, DÜG2), les unités de transmission de données V.24 (DÜG1, DÜG2), le terminal de données (DEE) et le dispositif de transmission de données (DÜE) sont exploités dans un mode de transmission de données de commande,
(b) en mode de transmission de données de commande, le terminal de données (DEE) transmet des données de commande (KD) avec différents débits binaires (BR) selon la phase de transmission de données,
(c) la première unité de transmission de données V.24 (DÜG1) reconnaît, lorsque la fonction autobauding est activée, que les données de commande (KD) ont été transmises avec différents débits binaires (BR) resp. qu'un changement du débit binaire a eu lieu, elle transmet à la deuxième unité de transmission de données V.24 (DÜG2) le débit binaire (BR) respectif au moyen de signalisation (SIG) et transmet à la deuxième unité de transmission de données V.24 (DÜG2) les données de commande (KD) émises par le terminal de données avec les différents débits binaires (BR),
(d) la deuxième unité de transmission de données (DÜG2) règle les débits binaires (BR) reçus par la première unité de transmission de données V.24 (DÜG1) en parallèle aux données de commande (KD) reçues et transmet au dispositif de transmission de données (DÜE) les données de commande (KD) ainsi réglées,
(e) le dispositif de transmission de données (DÜE) reconnaît, lorsque la fonction autobauding est activée, que les données de commande (KD) ont été transmises avec différents débits binaires (BR) resp. qu'un changement du débit binaire a eu lieu.

2. Procédé selon la revendication 1, **caractérisé en ce que**
les données de commande sont des commandes de Hayes spécifiques ayant le préfixe de Hayes « AT (Attention) ».

3. Procédé selon la revendication 1 ou 2, **caractérisé en ce**
**qu'**un modem est utilisé comme dispositif de transmission de données et en ce qu'un ordinateur personnel est utilisé comme terminal de données.

4. Procédé selon l'une quelconque des revendications 1 à 3, **caractérisé en ce**
**qu'**une interface air DECT est utilisée comme interface air.
